# FASCICULE DE BREVET EUROPEEN

(11) **EP 0 596 780 B1**
(45) Date de publication et mention de la délivrance du brevet: **08.04.1998**
(21) Numéro de dépôt: 93402650.1
(22) Date de dépôt: 28.10.1993
(51) Int. Cl.: H01J 47/00, G01T 1/185

(54) **Mélange de gaz pour le remplissage d'un compteur proportionnel équivalent au tissu biologique et compteur proportionnel équivalent au tissu biologique rempli de ce mélange de gaz**
Gasmischung für einer Gewebeäquivalent-Proportionalzählen und deren Verwendung
Gas mixture for a tissue equivalent proportional counter and use thereof

(30) Priorité: 02.11.1992 FR 9213096
(43) Date de publication de la demande: 11.05.1994
(73) Titulaire: COMMISSARIAT A L'ENERGIE ATOMIQUE, 75015 Paris (FR)
(72) Inventeur: Barthe, Jean, F-91300 Massy (FR); Bordy, Jean-Marc, F-91240 Saint Michel sur Orge (FR)
(74) Mandataire: Dubois-Chabert, Guy

(56) Documents cités:
- US-A- 3 676 682
- PHYSICS IN MEDICINE & BIOLOGY vol. 23, no. 3, Mai 1978, LONDON, GB; pages 388-396; AMOLS, H I ET AL: 'dose outside the treatment volume for irradiation with negative pions'
- NUCLEAR INSTRUMENTS AND METHODS IN PHYSICS RESEARCH, SECTION A vol. 243A, no. 1, Février 1986, AMSTERDAM, NL; pages 86-90; ZIMMERMAN W: 'HELIUM-PROPANE AS DRIFT CHAMBER GAS'
- PHYSICS IN MEDICINE & BIOLOGY vol. 25, no. 1, Mai 1980, LONDON, GB; pages 567-576; AWSCHALOM M:'A-150 PLASTIC-EQUIVALENT GAS'

## Description

La présente invention concerne la composition d'un mélange de gaz pour le remplissage de compteurs proportionnels équivalent au tissu biologique ainsi qu'un compteur proportionnel rempli de ce mélange de gaz.

Toute personne travaillant dans une centrale nucléaire ou au voisinage d'une source radioactive doit porter en permanence sur elle un dosimètre ou un compteur de mesure de la radioactivité. Ces appareils permettent, d'une part, de déterminer si cette personne a reçu ou non des radiations et, d'autre part, de quantifier la dose absorbée et l'équivalent de dose absorbée en fonction du rayonnement reçu. Ces compteurs sont de deux types, le type dit "passif" permettant uniquement d'enregistrer la quantité de radiations reçue mais nécessitant un traitement ultérieur de développement pour l'obtention des résultats et le type dit "actif" combiné avec un affichage permettant d'obtenir, en temps réel, la dose de radiations absorbée.

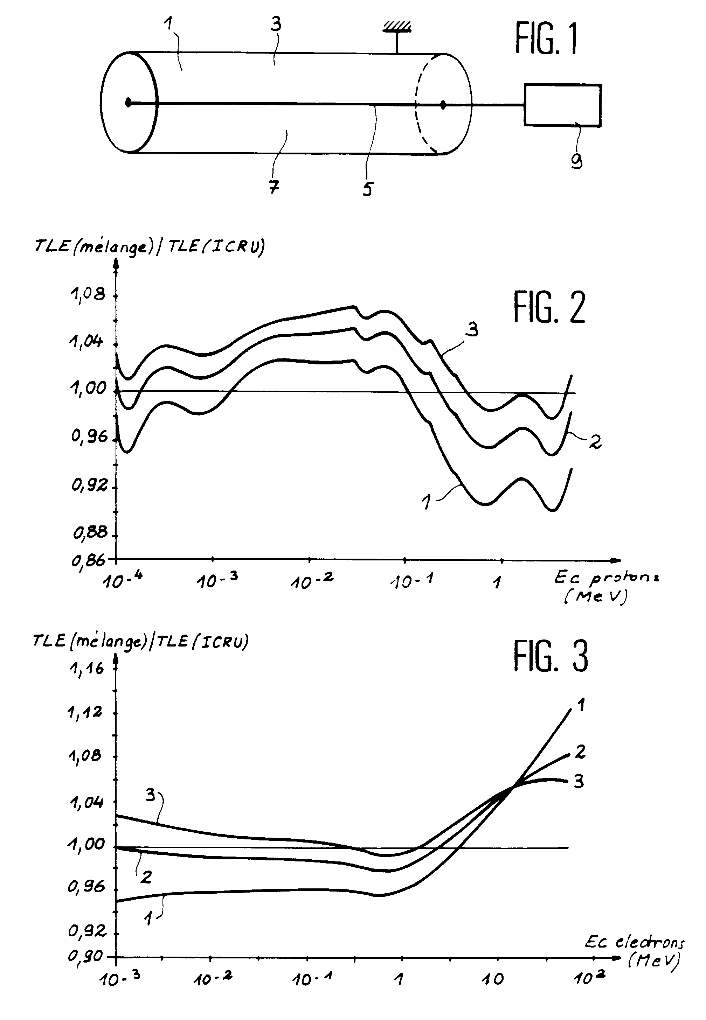

Parmi ces compteurs, il existe des compteurs proportionnels équivalent au tissu biologique, c'est-à-dire des compteurs destinés à simuler un volume de tissu biologique de quelques micromètres. Comme illustré sur la figure 1 jointe, ce type de compteur comprend une enceinte 1 délimitée par une gaine 3 de forme cylindrique et au centre de laquelle est prévue une anode 5. La gaine 3 forme une cathode. Elle pourrait présenter n'importe quelle autre forme. Cette gaine 3 est réalisée dans un matériau équivalent au tissu biologique, généralement une matière plastique connue sous la dénomination SHONKA A150 et contenant principalement du carbone, de l'hydrogène, de l'oxygène et de l'azote. L'enceinte 1 est remplie par un mélange gazeux 7 qui doit lui-même présenter des propriétés équivalentes au tissu biologique, afin que les interactions qui ont lieu dans ce compteur soient identiques à celles qui se produisent dans le tissu. Enfin, l'anode 5 est reliée à des moyens d'amplification 9 du signal électrique fourni par ladite anode.

Lors d'une exposition du compteur à un champ de rayonnement mixte comprenant des photons et des neutrons, ceux-ci interagissent dans la cathode et dans le gaz en donnant naissance à des particules chargées. Une partie des particules chargées générées dans la cathode traverse le gaz.

Les phénomènes physiques utilisés pour la détection sont l'ionisation et l'excitation du gaz. L'interaction d'une particule chargée avec les atomes du gaz, produit localement un certain nombre de paires d'ions, qui en l'absence de champ électrique (c'est-à-dire si le potentiel appliqué à l'anode est le même que celui appliqué à la cathode), se recombinent. Par contre, si le gaz est placé dans un champ électrique (c'est-à-dire si le potentiel appliqué à l'anode est supérieur à celui appliqué à la cathode), ce qui est le cas du compteur, les ions positifs formés migrent vers la cathode en traversant une zone où le champ électrique est de plus en plus faible et les électrons formés se déplacent vers l'anode en traversant une zone où le champ électrique est de plus en plus intense. Au fur et à mesure de son déplacement, l'électron est accéléré, il peut alors ioniser et exciter les atomes du gaz. Les électrons ainsi créés sont accélérés à leur tour et ainsi de suite. Une avalanche de Townsend se produit autour de l'anode. L'interaction d'une particule avec le compteur se traduit ainsi par une impulsion électrique recueillie aux bornes du compteur dont l'amplitude est proportionnelle au nombre d'électrons recueillis.

On peut définir le gain gazeux comme le rapport entre le nombre d'électrons collectés sur l'anode 5 et le nombre d'électrons créés lors de l'ionisation du gaz. Plus ce gain a une valeur élevée et plus performant est le compteur. La valeur du gain dépend du champ électrique existant entre l'anode et la cathode, de la nature du mélange gazeux 7 et de la pression de remplissage.

Enfin, il faut noter que la quantité d'énergie collectée par l'anode 5 varie suivant que le compteur est exposé aux neutrons ou aux photons. En analysant le signal obtenu, il est alors possible de comptabiliser les impulsions correspondant à de grandes quantités d'énergie (c'est-à-dire correspondant à l'interaction des neutrons) et les impulsions correspondant à de faibles quantités d'énergie (c'est-à-dire correspondant à l'interaction des photons).

Les mélanges de gaz 7 destinés à être placés dans l'enceinte 1 du compteur doivent posséder les propriétés suivantes :
- ils doivent eux-mêmes être équivalents au tissu biologique, c'est-à-dire se comporter vis-à-vis du rayonnement, comme se comporterait un tissu biologique mou, soumis à ce même rayonnement,
- ils doivent présenter un gain gazeux élevé, c'est-à-dire que le nombre d'électrons collectés sur l'anode 5 doit être grandement supérieur au nombre d'électrons créés lors de l'ionisation du gaz,
- ils ne doivent pas se dégrader sous l'effet du rayonnement incident, et enfin,
- ils ne doivent pas créer d'interaction chimique avec le matériau constituant la gaine 3.

On connaît déjà d'après l'art antérieur deux compositions de mélanges gazeux équivalent au tissu biologique, qui sont des mélanges à base de méthane ou de propane. Les compositions de ces deux mélanges existants sont les suivantes :
- composition n°1 :
   - méthane : 40,5 % en poids,
   - azote : 3,5 % en poids,
   - dioxyde de carbone : 56,0 % en poids,
- composition n°2 :
   - propane : 56,2 %,
   - azote : 3,5 %,
   - dioxyde de carbone : 40,3 %.

Ces mélanges de gaz utilisés dans les compteurs de l'art antérieur présentent des inconvénients. Ils doivent être renouvelés périodiquement du fait de la dégradation de leurs propriétés lors de l'irradiation et du fait de l'interaction chimique de leurs composants avec les parois des compteurs. En effet, lorsque des neutrons ou des photons arrivent sur la gaine 3, ils entraînent la formation de particules secondaires chargées qui pénètrent dans le gaz, excitent et ionisent celui-ci, enlèvent des électrons et voire même détruisent les molécules de CO₂ ou de propane. Ceci a pour effet de créer une polymérisation qui a tendance à se fixer sur l'anode collectrice 5. En outre, la vitesse des électrons augmente au fur et à mesure que les électrons s'approchent de l'anode collectrice. Ceci a pour effet d'entraîner la destruction des molécules de gaz. Ce dernier se dégrade donc rapidement.

Enfin, les compteurs fabriqués avec ces mélanges de gaz présentent un gain faible. Les moyens d'amplification 9 du signal doivent donc être extrêmement performants et coûteux.

Il serait donc avantageux de mettre au point un mélange gazeux équivalent au tissu biologique pouvant être utilisé dans un compteur proportionnel et ne présentant pas les inconvénients précédemment cités.

Par ailleurs, les compteurs proportionnels équivalent au tissu biologique utilisés jusqu'à présent étaient placés dans une pièce afin de mesurer les radiations à l'intérieur de celle-ci, mais n'étaient pas portés par des individus. Il était donc possible d'adjoindre à ces compteurs, une réserve de gaz permettant le renouvellement du mélange gazeux se trouvant à l'intérieur dudit compteur, avant que le gaz ne soit trop dégradé. Toutefois, dans une application de compteur portable, il est impossible d'adjoindre à l'utilisateur une bouteille de gaz, car ceci entraverait sa liberté de mouvement. Le compteur, selon l'invention, devra donc être d'assez petites dimensions pour pouvoir être porté facilement dans la poche d'un vêtement de l'utilisateur.

Enfin, les mélanges de gaz doivent présenter une composition se rapprochant le plus possible des normes de tissu biologique telles que définies par l'ICRU (International Commission Radioprotection Unit). En d'autres termes, il est nécessaire qu'il y est une continuité de milieu entre le mélange de gaz utilisé et la gaine 3 du compteur, de façon à simuler correctement les réponses d'un tissu biologique.

La composition d'un tissu biologique défini par l'ICRU donnée en pourcentage massique atomique est la suivante :
- hydrogène : 10,20 %
- carbone : 12,30 %
- azote : 3,50 %
- magnésium : 0,02 %,
- phosphore : 0,20 %,
- soufre : 0,50 %,
- oxygène : 72,90 %
- sodium : 0,08 %
- potassium : 0,30 %,
- calcium : 0,07 %.

La nature des gaz utilisables dans les compteurs ne permet toutefois pas de respecter rigoureusement les prescriptions de l'ICRU. Cependant, il faut respecter les compositions en hydrogène et en azote pour obtenir l'équivalence au tissu biologique vis-à-vis des neutrons.

Afin de répondre à ces nombreux impératifs, l'invention concerne un mélange de gaz pour le remplissage d'un compteur proportionnel équivalent au tissu biologique comprenant au moins du dioxyde de carbone, du propane et de l'azote.

Selon les caractéristiques de l'invention, ce mélange comprend également de l'argon.

De préférence, le mélange de gaz selon l'invention comprend environ entre 3 et 4% en poids d'azote, entre 46 et 66% en poids de propane et entre 30 et 50% en poids d'un mélange comprenant environ entre 5 et 80% en poids de CO₂ et entre 20 et 95% en poids d'argon.

De préférence encore, le mélange selon l'invention comprend environ 3,5% en poids d'azote, 56,2% en poids de propane, 35,3% en poids d'argon et 5% en poids de CO₂.

L'invention concerne également un compteur proportionnel équivalent au tissu biologique comprenant une anode, une cathode et une enceinte définie par ladite cathode, celle-ci étant réalisée dans un matériau équivalent au tissu biologique, l'enceinte contenant un mélange de gaz tel que celui qui a été défini précédemment.

La présente invention sera mieux comprise à la lecture de la description suivante d'un mode de réalisation préférentielle de l'invention donné à titre d'exemple illustratif et non limitatif, cette description étant faite en faisant référence aux dessins joints, dans lesquels :
- la figure 1 est un schéma illustrant un compteur proportionnel équivalent au tissu biologique du type de celui de l'invention,
- la figure 2 représente le rapport entre les transferts linéiques d'énergie (TLE) des protons traversant le mélange gazeux selon l'invention et traversant un milieu équivalent tissu défini par l'ICRU, en fonction de l'énergie cinétique des protons,
- la figure 3 est une courbe représentant le rapport entre les TLE des électrons traversant le mélange gazeux selon l'invention et traversant un milieu équivalent tissu défini par l'ICRU, en fonction de l'énergie cinétique des électrons,
- la figure 4 est une courbe représentant le rapport entre les coefficients d'absorption en énergie respectifs du mélange gazeux selon l'invention et d'un milieu équivalent tissu défini par l'ICRU, en fonction de l'énergie cinétique des photons,
- la figure 5 est une courbe représentant le rapport entre le kerma du mélange gazeux selon l'invention et celui d'un milieu équivalent tissu défini par l'ICRU, en fonction de l'énergie cinétique des neutrons, et
- la figure 6 est une courbe illustrant les spectres alpha obtenus avec le mélange gazeux selon l'invention et avec un mélange gazeux à base de propane de l'art antérieur.

Le compteur proportionnel équivalent au tissu biologique selon l'invention est similaire à celui qui a été décrit en faisant référence à la figure 1 précédemment, si ce n'est qu'il contient le mélange gazeux spécifique de l'invention.

On a constaté que l'addition d'argon dans le mélange gazeux augmentait de façon importante les propriétés du compteur contenant ce mélange. Le mélange gazeux selon l'invention présente la composition suivante :
- azote : environ 3 à 4% en poids, de préférence environ 3,4 à 3,6% en poids,
- propane : environ 46 à 66% en poids, de préférence environ 53,6 à 59,4% en poids,
- mélange de CO₂ et d'argon : environ 30 à 50% en poids, de préférence environ 37 à 43% en poids, le mélange comprenant environ entre 20 et 95% en poids d'argon et entre 5 et 80% en poids de CO₂ et de préférence entre 70 et 90% en poids d'argon et entre 10 et 30% en poids de CO₂, environ.

Les pourcentages totaux en poids, préférés du mélange sont les suivants : 35,3% d'argon, 5% de CO₂, 56,2% de propane et 3,5% d'azote, environ.

Les proportions de propane et d'azote ont été définies de sorte que l'équivalence au tissu biologique pour les neutrons soit respectée. Le dioxyde de carbone a été ajouté car il ralentit le vieillissement du mélange gazeux sous irradiation. Toutefois, on a pu constater qu'il suffisait d'une faible proportion de ce gaz pour obtenir l'effet désiré.

De façon surprenante, on a constaté qu'il était possible d'ajouter de l'argon alors que celui-ci n'entrait pas dans la composition des tissus biologiques mous. L'argon permet d'augmenter le gain gazeux et la stabilité du mélange au cours du temps.

Afin de vérifier que l'addition d'argon permet non seulement d'augmenter favorablement les propriétés du mélange gazeux mais également de conserver au mélange son caractère équivalent au tissu biologique, un certain nombre de mesures et de calculs ont été effectués.

Les résultats de ces mesures et de ces calculs sont donnés dans les exemples ci-dessous.

### Exemple 1

Lorsqu'une particule ionisante traverse le mélange gazeux contenu dans le compteur, elle subit des chocs successifs avec les molécules du milieu gazeux, ce qui a pour effet de faire appaître des ions auxquels cette particule communique une certaine énergie. Le transfert linéique d'énergie (TLE) est le rapport moyen entre l'énergie communiquée aux molécules du milieu gazeux au cours de ces chocs et la longueur de la trajectoire dans ce milieu. Les effets biologiques d'un rayonnement ionisant dépendent généralement de la valeur du TLE dans les tissus vivants.

La figure 2 jointe représente le rapport entre les différents TLE des protons traversant le mélange gazeux selon l'invention et traversant le tissu équivalent biologique défini par l'ICRU, en fonction de l'énergie cinétique des protons. Les courbes 1, 2 et 3 de la figure 2, ainsi que celles des figures 3 à 5 suivantes ont été obtenues avec des mélanges gazeux contenant respectivement 35% d'argon et 5,3% de CO₂, 20% d'argon et 20,3% de CO₂ et 10% d'argon et 30,3% de CO₂ ; les proportions de propane et d'azote étant constantes (56,2% de propane et 3,5% d'azote).

On constate que les valeurs du rapport oscillent autour de 1, ce qui indique que le mélange gazeux selon l'invention se comporte vis-à-vis des protons comme un tissu biologique. On notera toutefois que pour les photons incidents, le mélange gazeux selon l'invention présente une hypersensibilité dans la gamme d'énergie allant de 5.10⁻² à 0,5 MeV. Toutefois, cette hypersensibilité n'est pas préjudiciable dans la mesure où le rapport de densité des deux milieux constitués par la gaine 3 et le gaz 7 est voisin de 1000 et où l'énergie cédée au compteur par un faisceau de photons est presque intégralement absorbée par la cathode (gaine 3). En conséquence, la contribution du gaz à la réponse aux photons du compteur est alors négligeable.

### Exemple 2

Une expérience similaire à celle de l'exemple 1 a été réalisée mais en calculant les transferts linéiques d'énergie des électrons incidents. Les résultats obtenus sont illustrés sur la figure 3 jointe.

L'énergie usuelle d'un électron étant généralement inférieure à 1 ou 2 MeV, on peut constater que pour ces valeurs, les rapports des deux TLE restent relativement voisins de 1 (partie gauche des courbes). Le mélange gazeux présentant environ 20% d'argon semble donner les meilleurs résultats (courbe 2).

### Exemple 3

Dans cet exemple, on a calculé le coefficient d'absorption massique en énergie (µ en /ρ) des photons. Les courbes illustrent, en fonction de l'énergie cinétique de ces photons, la valeur du rapport entre le coefficient d'absorption du mélange gazeux selon l'invention et celui d'un tissu équivalent biologique selon les normes de l'ICRU.

Même dans le cas de la courbe 1, où l'on observe des valeurs de rapport pouvant atteindre 5 à 6, on constate que le mélange gazeux selon l'invention est encore tout à fait acceptable et que le compteur obtenu ne sera pas trop hypersensible à certaines radiations.

### Exemple 4

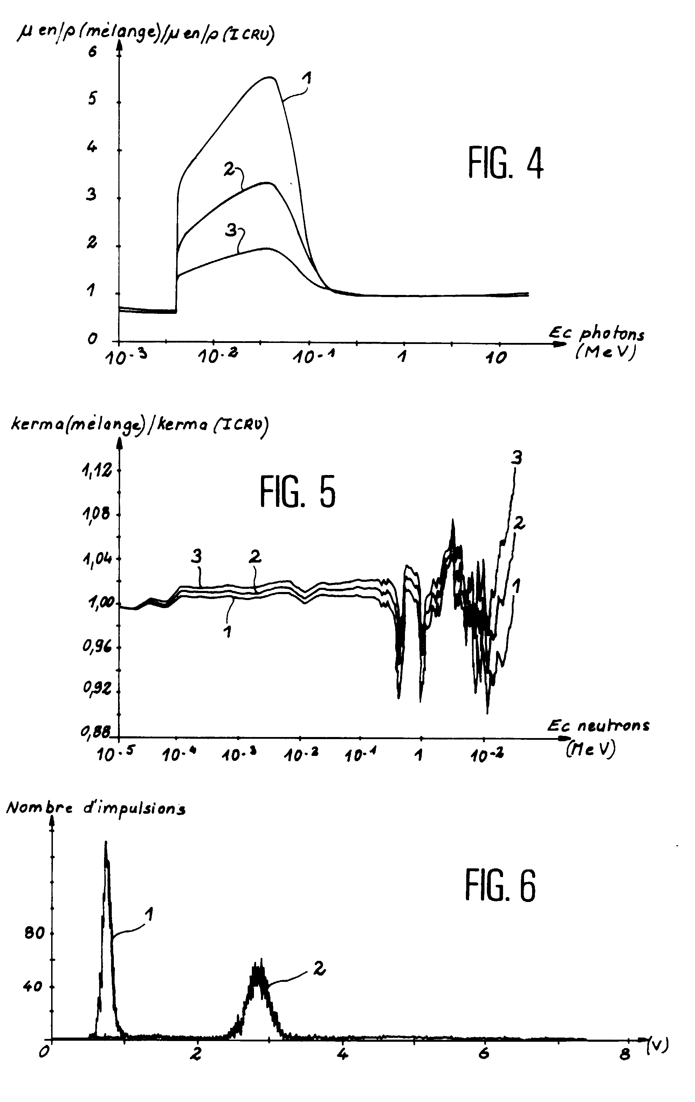

Le kerma représente le rapport entre la somme des énergies cinétiques initiales de toutes les particules ionisantes, que libère un rayonnement traversant un élément de volume du mélange gazeux et la masse de cet élément. Le kerma permet de caractériser du point de vue quantitatif les rayonnements indirectement ionisants. En conséquence, des valeurs de ces kermas sont fournies pour respecter les normes du tissu biologique ICRU. L'expérience a consisté à comparer le kerma du mélange gazeux selon l'invention avec celui de l'ICRU. La courbe de la figure 5 illustre le rapport entre les deux kermas en fonction de l'énergie cinétique des neutrons. On peut constater que jusqu'à 0,1 Mev, les valeurs du rapport restent très voisines de 1.

### Exemple 5

Un test a été effectué avec un compteur proportionnel équivalent au tissu en utilisant deux mélanges gazeux différents. Le premier mélange gazeux selon l'invention contenait 5% de CO₂, 3,5% d'azote, 56,2% de propane et 35,3% d'argon. L'autre mélange gazeux correspondait à un mélange à base de propane classique contenant 56,2% de propane, 3,5% d'azote et 40,3% de CO₂. Les tests ont été effectués avec une source de particules alpha interne au compteur, cette source permettant d'envoyer des particules alpha à l'intérieur du mélange gazeux et de compter ensuite le nombre d'impulsions électriques obtenues. Plus précisément, on mesure le nombre de fois où l'on obtient une impulsion d'une certaine amplitude.

Le pic n°1 correspond au résultat obtenu avec le mélange gazeux à base de propane de l'art antérieur et le pic n°2 à celui obtenu avec le mélange gazeux selon l'invention. Après calcul, on constate que le nombre d'impulsions collectées est identique pour les deux pics et que la résolution des deux pics est voisine.

Par contre, l'amplitude des impulsions obtenue avec le mélange gazeux selon l'invention est trois fois plus élevée que celle obtenue avec le mélange gazeux selon l'art antérieur. En conséquence, le gain est trois fois plus élevé. Avec le mélange gazeux de l'art antérieur, le gain était assez faible et il était nécessaire d'avoir à la sortie de l'enceinte gazeuse et notamment de l'anode collectrice 5, des moyens d'amplification 9 électroniques sophistiqués pour amplifier le signal obtenu de façon importante afin d'obtenir un résultat exploitable. Au contraire, avec le mélange gazeux selon l'invention, le gain fourni par le mélange gazeux en lui-même est trois fois plus important, ce qui permet d'utiliser des moyens d'amplification 9 moins performants, donc moins coûteux, moins perfectionnés et également de plus petites dimensions. Ces caractéristiques sont avantageuses puisque l'on souhaite réaliser un compteur portable et à un faible coût.

D'après les exemples 1 à 5 précédents, on peut constater que la variation des différents paramètres calculés par rapport au tissu ICRU de référence ne dépasse pas environ 12% ; excepté pour les photons. Une telle variation est compatible avec les objectifs de la radioprotection. Il est possible d'utiliser le plus fort pourcentage d'argon. Les pondérations d'azote et de propane choisies permettent de respecter au plus près les pondérations d'hydrogène et d'azote du tissu défini par l'ICRU.

## Revendications

1. Mélange de gaz (7) pour le remplissage d'un compteur proportionnel équivalent au tissu biologique comprenant au moins du dioxyde de carbone, du propane et de l'azote, caractérisé en ce qu'il comprend de l'argon.

2. Mélange de gaz selon la revendication 1, caractérisé en ce qu'il comprend environ entre 3 et 4% en poids d'azote, entre 46 et 66% en poids de propane et entre 30 et 50% en poids d'un mélange comprenant environ entre 5 et 80% en poids de CO₂ et entre 20 et 95% en poids d'argon.

3. Mélange de gaz selon la revendication 2, caractérisé en ce qu'il comprend environ entre 3,4 et 3,6% en poids d'azote, entre 53,6 et 59,4% en poids de propane et entre 37 et 43% en poids d'un mélange comprenant environ entre 10 et 30% en poids de CO₂ et entre 70 et 90% en poids d'argon.

4. Mélange de gaz selon la revendication 3, caractérisé en ce qu'il comprend environ 3,5% en poids d'azote, 56,2% en poids de propane, 35,3% en poids d'argon et 5% en poids de CO₂.

5. Compteur proportionnel équivalent au tissu biologique comprenant une anode (5), une cathode (3) et une enceinte (1) définie par ladite cathode (3), celle-ci étant réalisée dans un matériau équivalent au tissu biologique, caractérisé en ce que ladite enceinte (1) contient un mélange de gaz (7) selon l'une quelconque des revendications 1 à 4.

## Patentansprüche

1. Gasmischung (7) zum Füllen eines Lebendgewebeäquivalent-Proportionalzählers, die wenigstens Kohlenstoffdioxid, Propan und Stickstoff umfaßt,
**dadurch gekennzeichnet,** daß sie Argon enthält.

2. Gasmischung nach Anspruch 1, dadurch gekennzeichnet, daß sie ungefähr zwischen 3 und 4 Gew.% Stickstoff, zwischen 46 und 66 Gew.% Propan und zwischen 30 und 50 Gew.% einer Mischung enthält, die zwischen 5 und 80 Gew.% CO₂ und zwischen 20 und 95 Gew.% Argon enthält.

3. Gasmischung nach Anspruch 2, dadurch gekennzeichnet, daß sie ungefähr zwischen 3,4 und 3,6 Gew.% Stickstoff, zwischen 53,6 und 59,4 Gew.% Propan und zwischen 37 und 43 Gew.% einer Mischung enthält, die zwischen 10 und 30 Gew.% CO₂ und zwischen 70 und 90 Gew.% Argon enthält.

4. Gasmischung nach Anspruch 3, dadurch gekennzeichnet, daß sie ungefähr 3,5 Gew.% Stickstoff, 56,2 Gew.% Propan, 35,3 Gew.% Argon und 5 Gew.% CO₂ enthält.

5. Lebendgewebeäquivalent-Proportionalzähler, umfassend eine Anode (5), eine Kathode (3) und einen Behälter (1), definiert durch die genannte Kathode (3) und hergestellt aus einem dem Lebendgewebe äquivalenten Material,
**dadurch gekennzeichnet,** daß der genannte Behälter (1) eine Gasmischung (7) nach einem der Ansprüche 1 bis 4 enthält.

## Claims

1. Gas mixture (7) for filling a biological tissue-equivalent proportional counter, comprising at least carbon dioxide, propane and nitrogen, characterized in that it comprises argon.

2. Gas mixture according to Claim 1, characterized in that it comprises approximately between 3 and 4% by weight of nitrogen, between 46 and 66% by weight of propane and between 30 and 50% by weight of a mixture comprising approximately between 5 and 80% by weight of CO₂ and between 20 and 95% by weight of argon.

3. Gas mixture according to Claim 2, characterized in that it comprises approximately between 3.4 and 3.6% by weight of nitrogen, between 53.6 and 59.4% by weight of propane and between 37 and 43% by weight of a mixture comprising approximately between 10 and 30% by weight of CO₂ and between 70 and 90% by weight of argon.

4. Gas mixture according to Claim 3, characterized in that it comprises approximately 3.5% by weight of nitrogen, 56.2% by weight of propane, 35.3% by weight of argon and 5% by weight of CO₂.

5. Biological tissue-equivalent proportional counter comprising an anode (5), a cathode (3) and a chamber (1) defined by the said cathode (3), the latter being made of a biological tissue-equivalent material, characterized in that the said chamber (1) contains a gas mixture (7) according to any one of Claims 1 to 4.
